# EUROPEAN PATENT SPECIFICATION

(11) **EP 4 074 988 B1**
(45) Date of publication and mention of the grant of the patent: **23.10.2024**
(21) Application number: 21168641.5
(22) Date of filing: 15.04.2021
(51) Int. Cl.: F16B 5/02, F16B 41/00

(54) **CONNECTION SYSTEM AND METHOD OF CONNECTING**
VERBINDUNGSSYSTEM UND VERFAHREN ZUM VERBINDEN
SYSTÈME DE CONNEXION ET PROCÉDÉ DE CONNEXION

(43) Date of publication of application: 19.10.2022
(73) Proprietor: HENSOLDT Sensors GmbH, 82024 Taufkirchen (DE)
(72) Inventor: BÄUERLE, Alexander, 98129 Langenau (DE); GRAF, Constantin, 89233 Neu-Ulm (DE)
(74) Representative: LifeTech IP Spies & Behrndt Patentanwälte PartG mbB

(56) References cited:
- EP-A1- 0 058 911
- DE-A1- 102016 101 692
- DE-A1- 102018 120 105
- US-A1- 2011 073 074
- US-A1- 2012 263 557
- US-B2- 8 800 534

## Description

The present invention relates to a captive connector and a method for establishing a captive connection and, in particular, to a captive connection with an integrated vibration and/or shock decoupling.

### BACKGROUND

When mounting a motor, a fan or another vibrating device on a fixed bearing, it is of particular importance that the connection is vibration-safe. Furthermore, it is of advantage if the connection is be able to absorb at least some of the vibrations in the horizontal direction as well as in the vertical direction (mounting direction) and the corresponding connector can easily be fastened and released. Therefore, there is a demand for having a vibration and shock decoupled connection that decouples the vibration from a main assembly and provides a damping in all three directions of movement. In addition, the connection shall easily be interchangeable, the lock shall be captive and detachable only with suitable tools and the lock shall be tightened with a defined torque.

Conventional connections do not meet one or more of the above-mentioned requirements. For example, a conventional license plate fastener is disclosed in US 2012/0263557 A₁ and DE 10 2018 120 105 A1 discloses damping element with a bayonet closure.

### SUMMARY OF THE INVENTION

At least some of the above-mentioned problems are solved by a connection system according to claim 1 and a method of connecting according to claim 8.

The dependent claims refer to further advantageous realisations of the claimed subject matter.

The present invention relates to a connection system with a captive connector for establishing a captive connection between a first part and a second part, one of which being a fixed bearing and the other a support element. The first part includes a threaded hole and the second part includes an opening. The connector includes a threaded sleeve, one or more damping washers, and a bolt. The threaded sleeve extends in an axial direction and is configured to be inserted into the opening of the second part with a radial margin. The one or more damping washers are configured to receive the treaded sleeve and to sandwich the second part to provide a damping in the axial direction. The bolt is configured to threadedly engage the hole of the first part, to threadedly engage the treaded sleeve, and to secure the one or more damping washers together with the sandwiched second part at the first part. The combination of both treaded engagements prevents losing the bolt.

The bolt may comprise a bolt head and the sleeve may comprise a shoulder portion to abut the first part upon establishing the connection. The sleeve may have an axial extension to act as a spacer between a bolt head and the first part. The contact may be direct or indirect. For example, an additional ring washer may be arranged between the bolt head and one of the other washers and/or sleeve.

The sleeve comprises a threaded portion to threadedly engage the bolt, e.g. at a position opposite to the first part, when the connection is established. Thus, it may be threaded only at a portion along its axial extension. The threaded portion acts, upon establishing the connection, as a counter nut by exerting a force to prevent a relative rotation between the bolt and the threaded sleeve.

Optionally, the one or more damping washers include a first damping washer and a second damping washer. The second part may then be arranged between the first and second washers when the captive connection is established. The first and second damping washers may further comprise an elastic material and an axial extension to apply a predetermined pressure on the second part, upon establishing the captive connection.

The connection system includes the first part with a threaded hole, the second part with an opening, and one or more captive connectors as described before which are configured to establish a captive connection.

Optionally, the second part comprises a circumferential nut at an outer edge and a damping cord is arranged in the circumferential nut. The first part may comprise a circumferential stepped recess for receiving the outer edge of the second part. The circumferential nut may also be formed in stepped recess of first part. In both cases, the damping cord extends in at least one lateral direction between the second part and the first part to provide a lateral damping between the first part and the second part.

The first part may further include a deepening around the threaded hole. The deepening may be adapted to receive the shoulder portion of the sleeve and to ensure a direct contact of the one or more damping washers to the first part. The washers may exceed radially the deepening around the threaded hole to contact directly the shoulder of the sleeve as well as the first part. For this, the deepness of the deepening may be adapted accordingly so that upper surfaces of the sleeve and the first part are on a same level. This may prevent a relative rotation between the sleeve and the first part when bolt is fastened with a predetermined torque.

Optionally, the first part comprises at least one connection projection with the threaded hole and may include a fastener to attach it to a fixed frame. The second part may comprise at least one support projection with the opening and, optionally, a further fastener for a vibrating device to couple the vibrating device to the fixed frame while providing a vibration damping.

Optionally, the second part comprises at least three corner portions, and the at least one support projection may include multiple support projections formed at the corner portions of the second part.

Further embodiments relate to a method for establishing a captive connection using a captive connector between a first part and a second part, one of which being a fixed bearing and the other a support element. The first part includes a threaded hole and the second part an opening. The method comprises the steps of:
- providing a threaded sleeve extending in an axial direction;
- inserting the threaded sleeve into one or more damping washers while sandwiching the second part to provide a damping in the axial direction;
- threadedly engaging the treaded sleeve and a bolt;
- threadedly engaging the bolt with a threaded hole of the first part; and
- applying a predetermined torque on the bolt to secure the one or more damping washers together with the sandwiched second part at the first part.

It is understood that the list of steps does not imply an order and that all functions and effects described previously in conjunction with the captive connector can be implemented as further optional method steps.

Embodiments provide numerous advantages including one or more of the following:
The connection may provide an attenuation in all directions or rotations, i.e. not only in the vertical but also in both horizontal directions. The damping of the carrier in the fastening direction (vertical direction) is provided by the damping washers, whereas the damping of the carrier in the horizontal directions of movement is provided by the circumferential damping cord which can be deformed relative to the fixed bearing.

The fastening is provided by a spacer formed as a threaded sleeve, which acts as a captive screw. Hence, embodiments allow an easy access of the captive, but detachable fastening of the connection in combination with the three-dimensional decoupling and damping. It thus overcomes the deficiencies of the conventional connectors.

### BRIEF DESCRIPTION OF THE DRAWINGS

Various embodiments of the present invention will be described in the following by way of examples only, and with respect to the accompanying drawings, in which:
- Fig. 1: depicts a captive connector according to an embodiment of the present invention.
- Fig. 2: shows a cross-sectional view of an exemplary connection system according to embodiments.
- Fig. 3: shows a perspective view on the exemplary connection system according to embodiments.
- Fig. 4: depicts schematically a flow chart of a method for establishing a captive connection according to another embodiment.

### DETAILED DESCRIPTION

Various examples will now be described more fully with reference to the accompanying drawings, in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealised or overly formal sense unless expressly so defined herein.

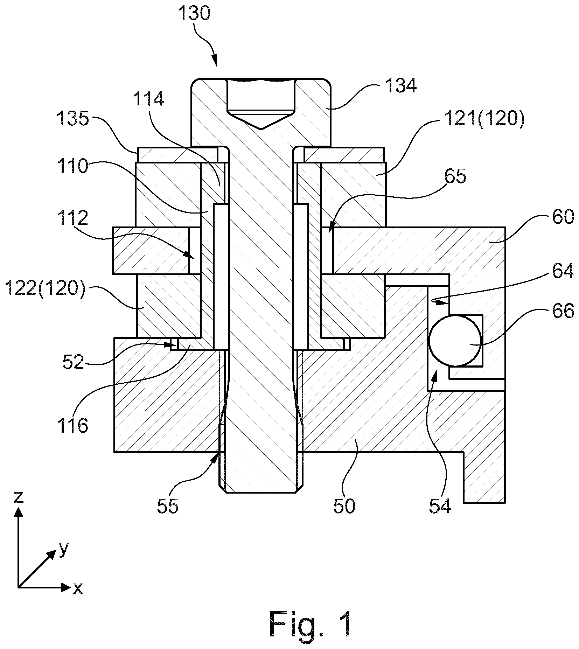

**Fig. 1** depicts a captive connector according to an embodiment of the present invention. The captive connector is suitable to connect a first part 50 with a second part 60, wherein one of them may represent a fixed bearing (for example the first part 50) and the other one provides a support element (for example the second part 60). The support element 60 may provide support for a device such as a fan or an electric motor or any other device which shall be secured while it produces vibrations or shocks. The captive connector shall decouple and protect the first part 50 as well as the second part 60 by damping any vibrations and/or shocks. Embodiments achieve this protection in both directions, the first part 50 is protected against the second part 60 and vice versa.

For this, the captive connector includes a sleeve 110, a damping washer 120 and a bolt (or screw) 130. The sleeve 110 extends through an opening 65 of the second part 60 and through the damping washer 120. The sleeve 110 comprises a threaded portion 114 for threadedly engaging the bolt 130. The bolt 130 provides another threaded engagement with the first portion 50 which in turn includes a threaded hole 55 for receiving the bolt 130. The threaded portion 114 may be provided only at a (end) portion of the sleeve 110 which simplifies the screwing.

When establishing the captive connection, the bolt 130 gets first into a threaded engagement with the sleeve 110 and later-on with the threaded hole 55 of the first part 50. Eventually, an axial force is exerted on the washers 120 and the sleeve 110 which will block a relative rotation of the sleeve 110 and the first part 50. This results in a counteraction of the sleeve 110 and, thereby, achieves the captive connection. The sleeve 110 thus acts as a counter nut.

In order to achieve the locking, the bolt 130 may be fastened with a predetermined torque that ensures an activation of the counter action of the sleeve 110. Furthermore, the locking mechanism may primarily be caused by the interaction of the bolt 130 with the sleeve 110. There is no need to fasten the bolt 130 particularly strong to the first part 50. Thus, the internal treads in the hole 55 are not subject to strong torques preventing damages at these threads. This represents an advantage, because a damaged bolt 130 and/or sleeve 110 may easily be replaced - a damaged thread in the hole 55 cannot be replaced that simple.

The washer 120 may comprise several portions or several elements to sandwich the second part 60 on both sides of the axial direction Z (fastening direction) to provide an axial damping for the second part 60 relative to the first part 50. For example, the washer 120 may include a groove where the second part 60 can be inserted with its opening 65 (e.g. when it is formed as a recess). However, without limitation, it will be assumed in the following that there are two washers 120, a first washer 121 and a second washer 122, that sandwich the second part 60.

The opening 65 or the second part 60 may be formed to provide a radial margin 112, which provides space for lateral shifts or lateral vibrations of the second part 60 relative to the bolt 130 and/or the first part 50. It is understood that the lateral shifts are perpendicular to the axial direction Z and may include vibrations along the X- or Y-direction.

The washers 120 may comprise an elastic or deformable material to allow the damping of the second part 60 relative to the first part 50. For example, the material may comprise a predetermined shore hardness and/or size or thickness of the washers to achieve a desired damping effect.

The sleeve 110 may comprise an extension along the axial direction Z such that the bolt 130 abuts (directly or indirectly), upon establishing a captive connection, to the sleeve 110. Therefore, the sleeve 110 may act as a spacer by providing an abutment for the bolt 130. As a result, the second part 60 is not squeezed between by the washers 120, but is allowed to perform a limited damped movement in the axial direction Z. An optional ring washer 135 may be provided between the washers 120 and the bolt 130 to provide a solid abutment for the elastic washers 120.

The washers 120 may have a thickness along the axial direction Z which, together with the thickness of the second part 60, is larger than the axial extension of the sleeve 110. Thus, when establishing the captive connection, the second part 60 is secured between the washers 120 under a predetermined pressure to allow a safe attachment while providing vibration absorption up to a degree determined by the material of the washers 120.

The first part 50 may include a deepening 52 around the threaded hole 55 and the sleeve 110 may comprise a shoulder portion 116. The deepening 52 is adapted to receive the shoulder portion 116 of the sleeve 110 and to ensure a direct contact of the exemplary second washer 122 to the first part 50. In addition, the second washer 122 is in direct contact with the should portion 116 so that, when establishing the captive connection, the acting axial force will prevent a rotation of the sleeve 110 relative to the first part 50 and the sleeve 110 can act as counter nut.

Embodiments further provide a damping with respect to the lateral direction(s) X, Y. For this, a damping cord 66 between an outer edge portion 64 of the second part 60 and a recess portion 54 of the first part 50. This damping cord 66 comprises an elastic or deformable material to allow an absorption of vibrations in the lateral direction(s) X, Y. It is understood that the damping cord 66 may be arranged in a groove of the second part 60 (e.g. in the outer edge 64 as shown in Fig. 1) or of the first part 50 (e.g. at the stepped recess 54, not shown in the drawings). For example, the material may comprise a predetermined shore hardness and/or size or thickness of the damping cord 66 to achieve a desired damping effect.

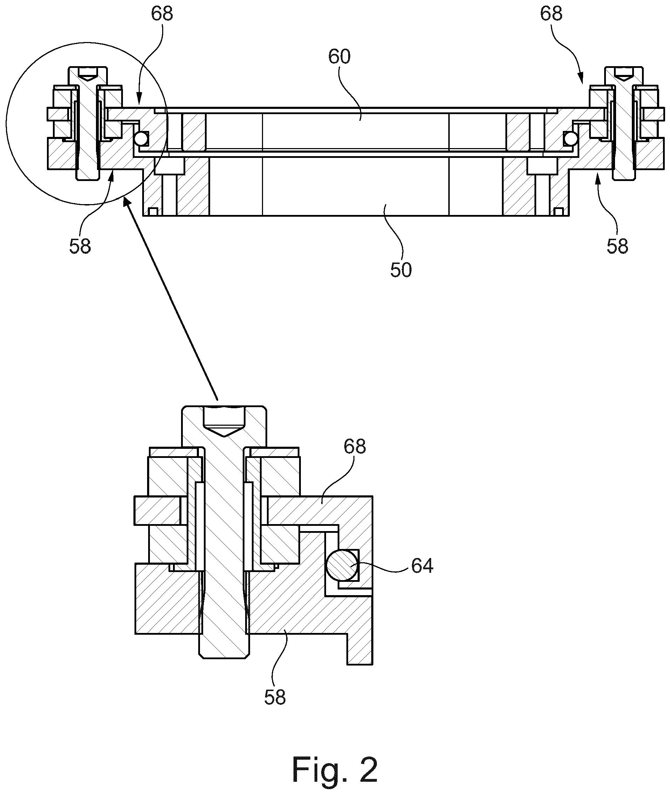

Embodiments relate also to a connection system including the first part 50 and the second part 60. **Fig. 2** shows a cross-sectional view of an exemplary connection system according to embodiments, wherein the first part 50 represents a fixed bearing onto which the second part 60 is mounted as a support element. This connection has an integrated vibration and shock decoupling implemented by the captive connector of Fig. 1.

For example, the captive connector is formed in projections 56, 68 of the first part 50 and the second part 60 and is shown in the enlarged view in Fig. 2. In the depicted embodiment, the first part 50 includes connection projections 58 and the second part 60 includes support projections 68, wherein the threaded hole 55 is included in the connection projections 58 and the opening 65 is included in the support projections 68.

In is understood that the second part 60 may be any suitable support element allowing to mount, e.g., any vibrating device thereon. Similarly, the first part 50 may represent part of a fixed bearing or may be attached to a fixed bearing to provide a solid/fixed support for the exemplary vibrating device (not shown in the Fig. 2).

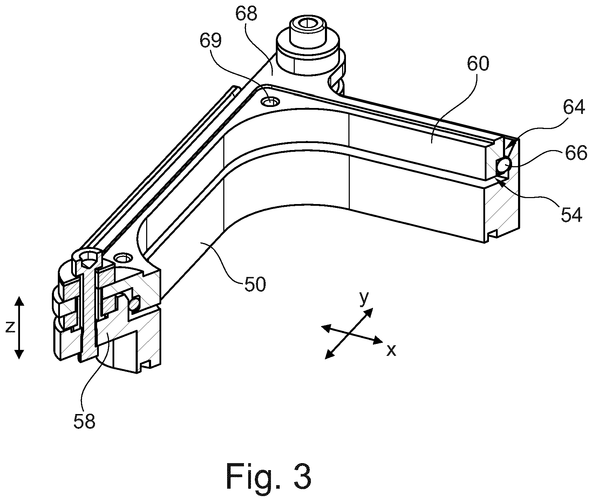

**Fig. 3** shows a perspective view on an exemplary connection system according to embodiments. The second part 60 represents the support element for the exemplary vibrating device which can be mounted on the second part 60 using fastening elements 69 (e.g. screw connections). The second part 60 may or may not have a through hole as shown in Fig. 3. The second part 60 may have to a rectangular or a triangular shape, wherein support projections 68 at the corner portions of the second part 60 accommodate the captive connectors.

Therefore, the second part 60 can be mounted on almost any fixed bearing 50 while allowing a vibration absorption in the axial direction Z as well as in the horizontal directions X and Y. In addition, if the first and second part 50, 60 are non-circular in the horizontal X,Y-plane, the stepped recess 54 of the first part 50 receiving the outer edge portion 64 of the second part 60 will absorb any torque around the vertical axis Z acting between the first and second part 50, 60. Again the damping cord 66 will provide a damping also with respect to these torques.

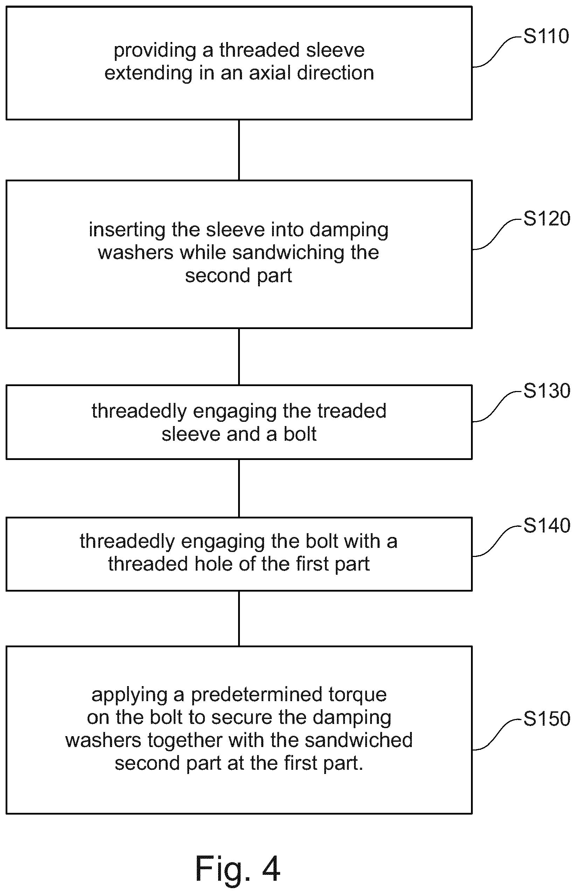

**Fig. 4** depicts schematically a flow chart of a method for establishing a captive connection according to another embodiment. The captive connection may connect the first part with the second part. The first part may include the threaded hole and the second part may include an opening. The method comprises:
- providing S110 a threaded sleeve 110 extending in an axial direction Z;
- inserting S120 the threaded sleeve 110 into one or more damping washers 120 while sandwiching the second part 60 to provide a damping in the axial direction Z;
- threadedly engaging S132 the treaded sleeve 110 and a bolt/screw 130;
- threadedly engaging S134 the bolt/screw 130 with a threaded hole 55 of the first part 50; and
- applying S136 a predetermined torque on the bolt 130 to secure the one or more damping washers 120 together with the sandwiched second part 60 at the first part 50.

Advantages of the embodiments include at least the following:
- The damping works in all three directions of movement.
- The elements cannot be lost.
- The damping element can be tightened with a specific torque.
- The damping properties are adjustable by selecting the shore hardness and size of the washers or the damping cord.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realised in other embodiments. Such combinations are covered by the disclosure herein unless it is stated that a specific combination is not intended.

### List of reference signs

- 50: first part (e.g. a fixed bearing)
- 52: recess
- 55: threaded hole(s)
- 58: connection projection(s)
- 60: second part (e.g. a support element)
- 62: circumferential nut
- 64: outer edge
- 65: opening(s)
- 66: damping cord
- 68: support projection(s)
- 110: threaded sleeve
- 112: radial margin
- 114: threaded portion
- 116: shoulder portion
- 120,121,122: damping washer(s)
- 130: bolt (or screw)
- 134: bolt head
- Z: axial direction
- X,Y: lateral directions

## Claims

1. A connection system including:
a first part (50) with a threaded hole (55);
a second part (60) with an opening (65); and
one or more captive connectors for establishing a captive connection between the first part (50) and the second part (60), one of which being a fixed bearing and the other a support element, the first part (50) including the threaded hole (55) and the second part (60) including the opening (65), the connector comprising
a threaded sleeve (110) extending in an axial direction (Z) and configured to be inserted into the opening (65) of the second part (60) with a radial margin (112);
one or more damping washers (120) configured to receive the treaded sleeve (110) and to sandwich the second part (60) to provide a damping in the axial direction (Z); and
a bolt (130) configured:
to threadedly engage the hole (55) of the first part (50),
to threadedly engage the treaded sleeve (110), and
to secure the one or more damping washers (120) together with the sandwiched second part (60) at the first part (50),
wherein both treaded engagements prevent losing the bolt (130),
the sleeve (110) comprising a threaded portion (114) to threadedly engage the bolt (130), wherein the threaded portion (114) acts, upon establishing the connection, as counter nut by exerting a force to prevent a relative rotation between the bolt (130) and the threaded sleeve (110).

2. The system according to claim 1,
the bolt (130) comprising a bolt head (134), and
the sleeve (110) comprising a shoulder portion (116) to abut the first part (50) upon establishing the connection and having an axial extension to act as a spacer between a head (134) of the bolt (135) and the first part (50).

3. The system according to the preceding claims, the one or more damping washers (120) including a first damping washer (121) and a second damping washer (122), between which the second part (60) is arranged when the captive connection is established,
wherein the first and second damping washers (121,122) comprise an elastic material and an axial extension to apply a predetermined pressure on the second part (60), upon establishing the captive connection.

4. The connection system according to one of the preceding claims, the second part (60) comprising an outer edge (64) and the first part (50) comprising a circumferential stepped recess (54) for receiving the outer edge (64) of the second part (60),
wherein a circumferential nut (62) is provided at an outer edge (64) or at the stepped recess (54), and wherein a damping cord (66) is arranged in the circumferential groove (62), the damping cord (65) extending in at least one lateral direction (X, Y) between the second part (60) and the first part (50) to provide a lateral damping between the first part (50) and the second part (60).

5. The connection system according to one of the preceding claims, when referred back to claim 2,
the first part (50) including a deepening (52) around the threaded hole (55), wherein the deepening (52) is adapted to receive the shoulder portion (116) of the sleeve (110) and to ensure a direct contact of one of the one or more damping washers (120) to the first part (50) and to the shoulder portion (116).

6. The connection system according to one of the preceding claims, the first part (50) comprising at least one connection projection (58) with the threaded hole (55) and a fastener to a fixed frame,
the second part (60) comprising at least one support projection (68) with the opening (65) and a fastener (69) for a vibrating device to couple the vibrating device to the fixed frame while providing a vibration damping.

7. The connection system according to claim 6, wherein the second part (60) comprises at least three corner portions, and the at least one support projection (68) includes multiple support projections formed at the corner portions of the second part (60).

8. A method for establishing a captive connection using a captive connector between a first part (50) and a second part (60), one of which being a fixed bearing and the other a support element, the first part (50) including a threaded hole (55) and the second part (60) including an opening (65), the method comprising:
providing (S110) a threaded sleeve (110) extending in an axial direction (Z);
inserting (S120) the threaded sleeve (110) into one or more damping washers (120) while sandwiching the second part (60) to provide a damping in the axial direction (Z);
threadedly engaging (S132) the treaded sleeve (110) and a bolt (130); threadedly engaging (S134) the bolt (130) with a threaded hole (55) of the first part (50); and
applying (S136) a predetermined torque on the bolt (130) to secure the one or more damping washers (120) together with the sandwiched second part (60) at the first part (50),
the sleeve (110) comprising a threaded portion (114) to threadedly engage the bolt (130), wherein the threaded portion (114) acts, upon establishing the connection,
as counter nut by exerting a force to prevent a relative rotation between the bolt (130) and the threaded sleeve (110).

## Patentansprüche

1. Ein Verbindungssystem, umfasst:
einen ersten Teil (50) mit einem Gewindeloch (55);
einen zweiten Teil (60) mit einer Öffnung (65); und
einen oder mehrere unverlierbare Verbinder zum Herstellen einer unverlierbaren Verbindung zwischen dem ersten Teil (50) und dem zweiten Teil (60), von denen einer ein festes Lager und der andere ein Stützelement ist, wobei der erste Teil (50) das Gewindeloch (55) und der zweite Teil (60) die Öffnung (65) umfasst, wobei der Verbinder Folgendes umfasst
eine Gewindehülse (110), die sich in einer axialen Richtung (Z) erstreckt und so konfiguriert ist, dass sie in die Öffnung (65) des zweiten Teils (60) mit einem radialen Rand (112) eingesetzt wird;
eine oder mehrere Dämpfungsscheiben (120), die so konfiguriert sind, dass sie die Gewindehülse (110) aufnehmen und den zweiten Teil (60) einspannen, um eine Dämpfung in der axialen Richtung (Z) bereitzustellen; und
eine Schraube (130), die konfiguriert ist:
um sich in das Loch (55) des ersten Teils (50) einzuschrauben,
um sich in die Gewindehülse (110) einzuschrauben, und
um die eine oder mehrere Dämpfungsscheiben (120) zusammen mit dem eingespannten zweiten Teil (60) am ersten Teil (50) zu befestigen,
wobei beide Gewindeverbindungen verhindern, dass die Schraube (130) verloren geht, wobei die Hülse (110) einen Gewindeabschnitt (114) umfasst, um die Schraube (130) einzuschrauben, wobei der Gewindeabschnitt (114) bei der Herstellung der Verbindung als Kontermutter wirkt, indem er eine Kraft ausübt, um eine relative Drehung zwischen der Schraube (130) und der Gewindehülse (110) zu verhindern.

2. Das System nach Anspruch 1,
wobei die Schraube (130) einen Schraubenkopf (134) umfasst, und
wobei die Hülse (110) einen Schulterabschnitt (116) umfasst, der beim Herstellen der Verbindung am ersten Teil (50) anliegt und eine axiale Verlängerung aufweist, um als Abstandshalter zwischen einem Kopf (134) der Schraube (130) und dem ersten Teil (50) zu wirken.

3. Das System nach den vorhergehenden Ansprüchen,
wobei die eine oder mehrere Dämpfungsscheiben (120) eine erste Dämpfungsscheibe (121) und eine zweite Dämpfungsscheibe (122) umfassen, zwischen denen der zweite Teil (60) angeordnet ist, wenn die unverlierbare Verbindung hergestellt ist,
wobei die erste und die zweite Dämpfungsscheibe (121,122) ein elastisches Material und eine axiale Verlängerung aufweisen, um beim Herstellen der unverlierbare Verbindung einen vorbestimmten Druck auf den zweiten Teil (60) auszuüben.

4. Das Verbindungssystem nach einem der vorhergehenden Ansprüche,
wobei der zweite Teil (60) einen äußeren Rand (64) umfasst und der erste Teil (50) eine umlaufende, abgestufte Ausnehmung (54) umfasst, um den äußeren Rand (64) des zweiten Teils (60) aufzunehmen,
wobei eine Umfangsmutter (62) an einem äußeren Rand (64) oder an der abgestuften Ausnehmung (54) vorgesehen ist, und wobei eine Dämpfungsschnur (66) in der Umfangsmutter (62) angeordnet ist, wobei die Dämpfungsschnur (65) sich in mindestens eine seitliche Richtung (X, Y) zwischen dem zweiten Teil (60) und dem ersten Teil (50) erstreckt, um eine seitliche Dämpfung zwischen dem ersten Teil (50) und dem zweiten Teil (60) bereitzustellen.

5. Das Verbindungssystem nach einem der vorhergehenden Ansprüche, wenn auf Anspruch 2 Bezug genommen wird,
wobei der erste Teil (50) eine Vertiefung (52) um das Gewindeloch (55) umfasst, wobei die Vertiefung (52) dazu ausgelegt ist, den Schulterabschnitt (116) der Hülse (110) aufzunehmen und um einen direkten Kontakt einer der einen oder mehreren Dämpfungsscheiben (120) mit dem ersten Teil (50) und dem Schulterabschnitt (116) sicherzustellen.

6. Das Verbindungssystem nach einem der vorhergehenden Ansprüche,
wobei der erste Teil (50) mindestens einen Verbindungsvorsprung (58) mit dem Gewindeloch (55) und einer Befestigung an einem festen Rahmen umfasst,
wobei der zweite Teil (60) mindestens einen Stützansatz (68) mit der Öffnung (65) und eine Befestigung (69) für ein vibrierendes Gerät umfasst, um das vibrierende Gerät an den festen Rahmen zu koppeln und gleichzeitig eine Vibrationsdämpfung bereitzustellen.

7. Das Verbindungssystem nach Anspruch 6, wobei der zweite Teil (60) mindestens drei Eckenabschnitte umfasst und die mindestens eine Stützansicht (68) mehrere Stützansätze bildet, die an den Eckenabschnitten des zweiten Teils (60) angeordnet sind.

8. Verfahren zum Herstellen einer unverlierbaren Verbindung mittels eines unverlierbaren Verbinders zwischen einem ersten Teil (50) und einem zweiten Teil (60), von denen einer ein festes Lager und der andere ein Stützelement ist, der erste Teil (50) ein Gewindeloch (55) umfasst und der zweite Teil (60) eine Öffnung (65) umfasst, wobei das Verfahren Folgendes umfasst:
Bereitstellen (S110) einer Gewindehülse (110), die sich in einer axialen Richtung (Z) erstreckt;
Einsetzen (S120) der Gewindehülse (110) in eine oder mehrere Dämpfungsscheiben (120) unter gleichzeitiger Einspannung des zweiten Teils (60), um eine Dämpfung in der axialen Richtung (Z) bereitzustellen;
Verschrauben (S132) der Gewindehülse (110) und einer Schraube (130) durch Gewindeverbindung;
Einschrauben (S134) der Schraube (130) in das Gewindeloch (55) des ersten Teils (50) durch Gewindeverbindung; und
Anwenden (S136) eines vorbestimmten Drehmoments auf die Schraube (130), um die eine oder mehrere Dämpfungsscheiben (120) zusammen mit dem eingespannten zweiten Teil (60) am ersten Teil (50) zu sichern,
die Hülse (110) umfasst einen Gewindeabschnitt (114), um die Schraube (130) durch die Gewindeverbindung aufzunehmen, wobei der Gewindeabschnitt (114) beim Herstellen der Verbindung als Kontermutter wirkt, indem er eine Kraft ausübt, um eine relative Drehung zwischen der Schraube (130) und der Gewindehülse (110) zu verhindern.

## Revendications

1. Un système de connexion comprenant:
une première partie (50) avec un trou fileté (55);
une deuxième partie (60) avec une ouverture (65); et
un ou plusieurs connecteurs imperdables pour établir une connexion imperdable entre la première partie (50) et la deuxième partie (60), l'une d'elles étant un palier fixe et l'autre un élément de support, la première partie (50) comprenant le trou fileté (55) et la deuxième partie (60) comprenant l'ouverture (65), le connecteur comprenant
un manchon fileté (110) s'étendant dans une direction axiale (Z) et configuré pour être inséré dans l'ouverture (65) de la deuxième partie (60) avec une marge radiale (112);
une ou plusieurs rondelles d'amortissement (120) configurées pour recevoir le manchon fileté (110) et pour enserrer la deuxième partie (60) afin de fournir un amortissement dans la direction axiale (Z); et
un boulon (130) configuré pour:
s'engager par filetage dans le trou (55) de la première partie (50),
s'engager par filetage dans le manchon fileté (110), et
fixer la ou les rondelles d'amortissement (120) avec la deuxième partie (60) enserrée à la première partie (50),
où les deux engagements filetés empêchent la perte du boulon (130), le manchon (110) comprenant une portion filetée (114) pour engager par filetage le boulon (130), la portion filetée (114) agissant, lors de l'établissement de la connexion, comme un contre-écrou en exerçant une force pour empêcher une rotation relative entre le boulon (130) et le manchon fileté (110).

2. Le système selon la revendication 1,
le boulon (130) comprenant une tête de boulon (134), et
le manchon (110) comprenant une partie épaule (116) destinée à venir en butée contre la première partie (50) lors de l'établissement de la connexion et ayant une extension axiale pour servir d'entretoise entre une tête (134) du boulon (130) et la première partie (50).

3. Le système selon les revendications précédentes,
les une ou plusieurs rondelles d'amortissement (120) comprenant une première rondelle d'amortissement (121) et une deuxième rondelle d'amortissement (122), entre lesquelles la deuxième partie (60) est disposée lorsque la connexion imperdable est établie,
les première et deuxième rondelles d'amortissement (121, 122) comprenant un matériau élastique et une extension axiale pour appliquer une pression prédéterminée sur la deuxième partie (60) lors de l'établissement de la connexion imperdable.

4. Le système de connexion selon l'une des revendications précédentes,
la deuxième partie (60) comprenant un bord extérieur (64) et la première partie (50) comprenant un évidement périphérique étagé (54) pour recevoir le bord extérieur (64) de la deuxième partie (60),
une rainure périphérique (62) étant prévue au niveau d'un bord extérieur (64) ou de l'évidement étagé (54), et une corde d'amortissement (66) étant disposée dans la rainure périphérique (62), la corde d'amortissement (65) s'étendant dans au moins une direction latérale (X, Y) entre la deuxième partie (60) et la première partie (50) pour fournir un amortissement latéral entre la première partie (50) et la deuxième partie (60).

5. Le système de connexion selon l'une des revendications précédentes, lorsqu'il se réfère à la revendication 2,
la première partie (50) comprenant un approfondissement (52) autour du trou fileté (55), l'approfondissement (52) étant adapté pour recevoir la partie épaule (116) du manchon (110) et pour assurer un contact direct de l'une des une ou plusieurs rondelles d'amortissement (120) avec la première partie (50) et la partie épaule (116).

6. Le système de connexion selon l'une des revendications précédentes,
la première partie (50) comprenant au moins une saillie de connexion (58) avec le trou fileté (55) et un élément de fixation à un cadre fixe,
la deuxième partie (60) comprenant au moins une saillie de support (68) avec l'ouverture (65) et un élément de fixation (69) pour un dispositif vibrant afin de coupler le dispositif vibrant au cadre fixe tout en assurant un amortissement des vibrations.

7. Le système de connexion selon la revendication 6, où la deuxième partie (60) comprend au moins trois portions d'angle, et la ou les saillies de support (68) comprennent plusieurs saillies de support formées aux portions d'angle de la deuxième partie (60).

8. Un procédé pour établir une connexion imperdable à l'aide d'un connecteur imperdable entre une première partie (50) et une deuxième partie (60), l'une étant un palier fixe et l'autre un élément de support, la première partie (50) comprenant un trou fileté (55) et la deuxième partie (60) comprenant une ouverture (65), le procédé comprenant:
Fournir (S110) un manchon fileté (110) s'étendant dans une direction axiale (Z);
Insérer (S120) le manchon fileté (110) dans une ou plusieurs rondelles d'amortissement (120) tout en enserrant la deuxième partie (60) pour fournir un amortissement dans la direction axiale (Z);
Engager par filetage (S132) le manchon fileté (110) et un boulon (130);
Engager par filetage (S134) le boulon (130) dans le trou fileté (55) de la première partie (50); et
Appliquer (S136) un couple prédéterminé sur le boulon (130) pour sécuriser la ou les rondelles d'amortissement (120) avec la deuxième partie (60) enserrée à la première partie (50),
le manchon (110) comprenant une portion filetée (114) pour engager par filetage le boulon (130), la portion filetée (114) agissant, lors de l'établissement de la connexion, comme un contre-écrou en exerçant une force pour empêcher une rotation relative entre le boulon (130) et le manchon fileté (110).
